(19) Europäisches Patentamt
European Patent Office
Office européen des brevets

(11) **EP 4 354 366 B1**

(12) **EUROPÄISCHE PATENTSCHRIFT**

(45) Veröffentlichungstag und Bekanntmachung des Hinweises auf die Patenterteilung:
**25.06.2025 Patentblatt 2025/26**

(21) Anmeldenummer: **22201310.4**

(22) Anmeldetag: **13.10.2022**

(51) Internationale Patentklassifikation (IPC):
$G06Q\ 10/02^{(2012.01)}$ $G07C\ 11/00^{(2006.01)}$

(52) Gemeinsame Patentklassifikation (CPC):
**G06Q 10/02; G07C 11/00;** G07C 2011/04

(54) **VORRICHTUNG UND VERFAHREN ZUM MESSEN DER LÄNGE EINER WARTESCHLANGE VON PERSONEN**

APPARATUS AND METHOD FOR MEASURING THE LENGTH OF A QUEUE OF INDIVIDUALS

DISPOSITIF ET PROCÉDÉ DE MESURE DE LA LONGUEUR D'UNE FILE D'ATTENTE DE PERSONNES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**17.04.2024 Patentblatt 2024/16**

(73) Patentinhaber: **Qmetrix GmbH**
**1020 Wien (AT)**

(72) Erfinder: **PUNZENGRUBER, Dieter**
**1130 Wien (AT)**

(74) Vertreter: **Weiser Voith Gugler**
**Patentanwälte Partnerschaft**
**Kopfgasse 7**
**1130 Wien (AT)**

(56) Entgegenhaltungen:
**US-A1- 2016 192 149** **US-A1- 2017 351 982**
**US-A1- 2019 066 087**

**Beschreibung**

Die vorliegende Erfindung betrifft eine Vorrichtung und ein Verfahren zum Messen der Länge einer Warteschlange von Personen, die einen Eingang und ein davon entferntes Ende hat.

Die Länge einer Warteschlange ist zum einen für die darin Wartenden sowie die dem Ende der Warteschlange zuströmenden Personen von Interesse, damit sie sich entsprechend auf die Wartezeit vorbereiten und ihre Tagesaufgaben planen können. Mehr noch ist die Warteschlangenlänge für die Betreiber der Einrichtungen wichtig, vor denen sich die Warteschlange aufbaut, z.B. Schaltern einer Behörde oder eines Kundenbüros, Flughafengates, Kassen in einem Supermarkt, Eingängen einer Veranstaltungshalle, Haltestellen von Verkehrsmitteln usw. In Kenntnis der Warteschlangenlänge können sie so beispielsweise entscheiden, ob zusätzliche Schalter, Gates oder Eingänge geöffnet werden müssen oder nicht ausgelastete geschlossen werden können, oder die Verarbeitungsgeschwindigkeit der vorhandenen Einrichtungen erhöht oder reduziert werden soll, beispielsweise der Takt oder die Kapazität von Verkehrsmitteln usw, um eine optimale Auslastung der verfügbaren Einrichtung ohne übermäßige Wartezeit zu erreichen.

Derzeit wird die Länge einer Warteschlange mit Kameras, Lichtschranken, Ultraschall- oder Infrarotsensoren, Trittschaltermatten od.dgl. gemessen. Alle diese Einrichtungen benötigen aufwendige Infrastruktur vor Ort, einschließlich entsprechender Verkabelungen für Strom und Datenverkehr.

Die Erfindung setzt sich zum Ziel, Vorrichtungen und Verfahren zur Längenmessung von Warteschlangen zu schaffen, die wenig Infrastruktur erfordern und rasch und flexibel vor Ort einsetzbar sind.

Dieses Ziel wird in einem ersten Aspekt der Erfindung mit einer Vorrichtung der einleitend genannten Art erreicht, die sich gemäß der Erfindung auszeichnet durch:

zumindest zwei an der Warteschlange in unterschiedlichen Entfernungen vom Ausgang angeordnete Datenträger mit jeweils einer eindeutigen, von einem Smart Device einer wartenden Person maschinenlesbaren Kennung, welche die Entfernung dieses Datenträgers vom Ausgang kodiert;
eine Recheneinrichtung mit einer Schnittstelle, über die sie von Smart Devices maschinengelesene und über ein Funknetz gesendete Kennungen empfangen kann;
wobei die Recheneinrichtung dafür ausgebildet ist, aus allen Entfernungen, die von den in einem vorgegebenen Zeitfenster empfangenen Kennungen kodiert werden, die größte Entfernung auszuwählen und als Länge der Warteschlange auszugeben.

Die Erfindung beruht auf einem neuen technologischen Ansatz zur Warteschlangenmessung durch Mitverwendung der von den Wartenden mitgeführten Smart Devices, z.B. Smartphones, mit welchen entlang der Warteschlange aufgestellte Datenträger gescannt werden, beispielsweise um so Information über die Wartezeit in der Warteschlange zu erhalten. Die Erfindung baut einerseits darauf auf, dass heutzutage beinahe jede und jeder ein Smart Device mit sich trägt, das maschinenlesbare Kennungen wie QR-Codes, Barcodes, NFC-Tags od.dgl. abscannen kann, und anderseits auf dem Informationsbedarf der Wartenden, welche die Datenträger entlang der Warteschlange mit ihrem Smart Device abscannen. Durch die Informationsabfragen der Wartenden ergibt sich statistisch über ein Zeitfenster gesehen ein örtliches Abbild der Warteschlange, weil die Wartenden in der Regel frühestens dann, wenn sie auf das Ende der Warteschlange auflaufen, zu scannen beginnen. Wenn somit von den in einem bestimmten Zeitfenster einlangenden Kennungen, die jeweils für einen (Datenträger-)Ort in der Warteschlange stehen, nur jene mit der größten Entfernung vom Ausgang der Warteschlange berücksichtigt werden, dann ist damit die Länge der Warteschlange vom Ausgang bis zu ihrem Ende - in den Auflösungsgrenzen der Verteilung der Datenträger - gemessen.

Bevorzugt werden die Datenträger in annähernd gleichen Abständen entlang der Warteschlange verteilt angeordnet, so dass die Länge in einem linearen Maßstab gemessen werden kann.

Die Größe des Zeitfensters, in dem jeweils die Kennung mit der größten Ausgangsentfernung ausgewählt wird, bestimmt sowohl die örtliche als auch die zeitliche Auflösung der Längenmessung. Ist das Zeitfenster zu kurz, langen möglicherweise keine Datenträger-Scans vom Ende der Warteschlange ein und die Längenmessung ist örtlich ungenau. Mit einem ausreichend langen Zeitfenster kann sichergestellt werden, dass zumindest ein Datenträger-Scan vom Warteschlangenende herrührt. Die Ortsauflösung der Längenmessung ist also umso höher, je länger das Zeitfenster ist. Ist das Zeitfenster jedoch zu lang, kann dynamischen Änderungen der Warteschlangenlänge, also ihrem Anwachsen und Abschmelzen über der Zeit, nicht mehr ausreichend gefolgt werden können. Je kürzer das Zeitfenster ist, desto besser ist somit die zeitliche Auflösung der Längenmessung.

In einer bevorzugten Ausführungsform der Erfindung wird daher vorgesehen, dass das Zeitfenster ein Zehntel bis das Zehnfache, bevorzugt die Hälfte bis das Doppelte, besonders bevorzugt das Einfache, des Werts

$$\Delta T_{opt} = (\Delta L \cdot D) / (SR + FR)$$

ist, mit

ΔL    durchschnittlicher Abstand zwischen zwei benachbarten Datenträgern,

D    durchschnittliche Anzahl von Personen pro Längeneinheit in der Warteschlange,

FR    Rate an pro Zeiteinheit dem Ende der Warteschlange zuströmenden Personen,

SR    Rate an pro Zeiteinheit den Ausgang der Warteschlange verlassenden Personen.

Der genannte Wert stellt einen optimalen Kompromiss zwischen Ortsgenauigkeit und Zeitaktualität der Längenmessung dar. In dem speziellen Vorzugsbereich zwischen halbem und zweifachem Optimum ergeben sich besonders praxistaugliche Ausführungsformen. Der breitere Vorzugsbereich zwischen einem Zehntel und einem Zehnfachen des Optimums gestattet Ausführungsformen je nach den gewünschten Anforderungen, sei es mit besonders hoher Ortsgenauigkeit oder besonders hoher Zeitaktualität.

Das Anbringen des bzw. der Datenträger entlang der Warteschlange ist ein überaus einfacher und kostengünstiger Vorgang. Beispielsweise können Aufkleber als Datenträger verwendet werden, die mit einer Kamera eines Smart Device optisch gelesen werden können, oder RFID- oder NFC-Tags, die mittels eines RFID- oder NFC-Readers im Smart Device über Funk ausgelesen werden können. Für erstere Variante trägt bevorzugt jeder Datenträger seine Kennung in Form eines kameralesbaren QR-Codes oder Barcodes. Moderne Smartphones sind regelmäßig bereits mit einer Kamera ausgestattet, sodass die Erfindung in breitem Umfang eingesetzt werden kann.

Bevorzugt enthält die bzw. jede Kennung auch eine Webadresse der Recheneinrichtung, so dass von den Wartenden datenträgerspezifischer Content, z.B. eine datenträgerortsspezifische Wartezeit, über einen einfachen Aufruf der Webadresse in einer Internetverbindung über das Funknetz abgefragt werden kann.

Vor Veranstaltungssälen, in Wartebereichen von Behörden, Kundencentern, Kassen, Märkten, auf Flughäfen usw. werden Warteschlangen häufig durch Gurtständer, Begrenzungspfosten od.dgl. begrenzt. Gemäß einer besonders bevorzugten Ausführungsform der Erfindung ist zumindest ein Datenträger an einem solchen Gurtständer oder Begrenzungspfosten für die Warteschlange angebracht. Die Installation der erfindungsgemäßen Vorrichtung vor Ort erfordert damit lediglich die Montage einer Erfassungseinrichtung am Ausgang der Warteschlange, eine entsprechend mit dieser und den Smart Devices der Wartenden verbindbare Recheneinrichtung und das Aufstellen solcher mit Datenträgern versehenen Gurtständer bzw. Begrenzungspfosten.

In mäanderförmigen Warteschlangen werden manche Gurtständer bzw. Begrenzungspfosten zwischen zwei benachbarten, entgegengesetzt durchlaufenen Abschnitten der Warteschlange eingesetzt, d.h. die Wartenden gehen beidseitig und in entgegengesetzten Richtungen an solchen Gurtständern bzw. Begrenzungspfosten vorbei. In diesem Fall ist es besonders günstig, wenn ein solcher Gurtständer bzw. Begrenzungspfosten mit zumindest zwei in unterschiedliche Richtungen weisenden Datenträgern versehen ist.

Ein besonderes Incentive, das die Wartenden zum Abscannen der entlang der Warteschlange angeordneten Datenträger verleitet, besteht darin, dass in einer bevorzugten Ausführungsform der Erfindung die Wartenden an jedem Datenträger durch Abscannen ihre aktuelle Wartezeit an diesem Ort der Warteschlange in Erfahrung bringen können. Bevorzugt ist dazu die Recheneinrichtung dafür ausgebildet, für zumindest einen Datenträger aus seiner Entfernung vom Ausgang und der aktuellen Rate an pro Zeiteinheit den Ausgang verlassenden Personen eine datenträgerortsspezifische aktuelle Wartezeit zu berechnen und unter seiner Kennung zur Ausgabe über ein Funknetz an ein Smart Device bereitzustellen.

Die Erfindung ermöglicht damit einer in der Warteschlange wartenden Person eine dynamische Anzeige ihrer aktuellen Wartezeit auf ihrem eigenen Smart Device, z.B. Smartphone, durch Abscannen eines in ihrer Nähe befindlichen Datenträgers mit dem Smart Device. Eine aufwendige stationäre Infrastruktur in Form von verteilten Bildschirmen, deren Verkabelung und sichere Montage sind nicht erforderlich. Das Smart Device der wartenden Person kann genau ihre Wartezeit an ihrem jeweiligen Ort in der Warteschlange, wo der abgescannte Datenträger angeordnet ist, ausgeben.

In dieser Ausführungsform kann die Recheneinrichtung die aktuellen Wartezeiten nicht nur zur Ausgabe über das Funknetz bereitstellen, sondern bevorzugt auch die von einem Smart Device maschinengelesene Kennung über das Funknetz empfangen und die unter dieser Kennung bereitgestellte aktuelle Wartezeit über das Funknetz an dieses Smart Device zur Ausgabe darauf senden.

In einem zweiten Aspekt schafft die Erfindung ein Verfahren zum Messen der Länge einer Warteschlange von Personen, die einen Eingang und einen Ausgang hat, umfassend die Schritte:

a) Anordnen zumindest zweier Datenträger an der Warteschlange in unterschiedlichen Entfernungen vom Ausgang, wobei jeder Datenträger eine eindeutige, von einem Smart Device einer wartenden Person maschinenlesbare Kennung hat, welche die Entfernung dieses Datenträgers vom Ausgang kodiert;

b) in einer Recheneinrichtung: Empfangen von von Smart Devices maschinengelesenen und über ein Funknetz gesendeten Kennungen über ein vorgegebenes Zeitfenster, Auswählen der größten Entfernung aus allen Entfernungen, die von den im Zeitfenster empfangenen Kennungen kodiert werden, und Ausgeben der ausgewählten Entfernung als Länge der Warteschlange.

Bevorzugt werden die Datenträger in annähernd gleichen Abständen entlang der Warteschlange verteilt angeordnet.

Besonders günstig ist es, wenn das vorgegebene Zeitfenster ein Zehntel bis das Zehnfache, bevorzugt die Hälfte bis das Doppelte, besonders bevorzugt das Einfache, des Werts

$$\Delta T_{opt} = (\Delta L \cdot D) / (SR + FR)$$

ist.

Hinsichtlich weiterer bevorzugter Merkmale und Vorteile des erfindungsgemäßen Verfahrens wird auf die obigen Ausführungen zur erfindungsgemäßen Vorrichtung verwiesen.

Die Erfindung wird nachstehend anhand von in den beigeschlossenen Zeichnungen dargestellten Ausführungsbeispielen näher erläutert. In den Zeichnungen zeigt:

Fig. 1 die Verwendung der Vorrichtung und des Verfahrens der Erfindung in einer Warteschlange von Personen in einer schematischen Perspektivansicht;
Fig. 2 die Vorrichtung der Erfindung in einer schematischen Draufsicht;
Fig. 3 ein Verfahren zur Wartezeitanzeige für Wartende, das im Rahmen der Vorrichtung und des Verfahren der Erfindung optional zum Einsatz kommt, in einem Flussdiagramm;
Fig. 4 das Einlangen von von Wartenden maschinengelesenen Datenträgerkennungen in der Vorrichtung von Fig. 2 in einem Zeitdiagramm;
Fig. 5 auf Basis der eingelangten Kennungen von Fig. 4 durchgeführte Längenmessungen der Warteschlange in einem Zeitdiagramm; und
Fig. 6 das Verfahren der Erfindung in einem Flussdiagramm.

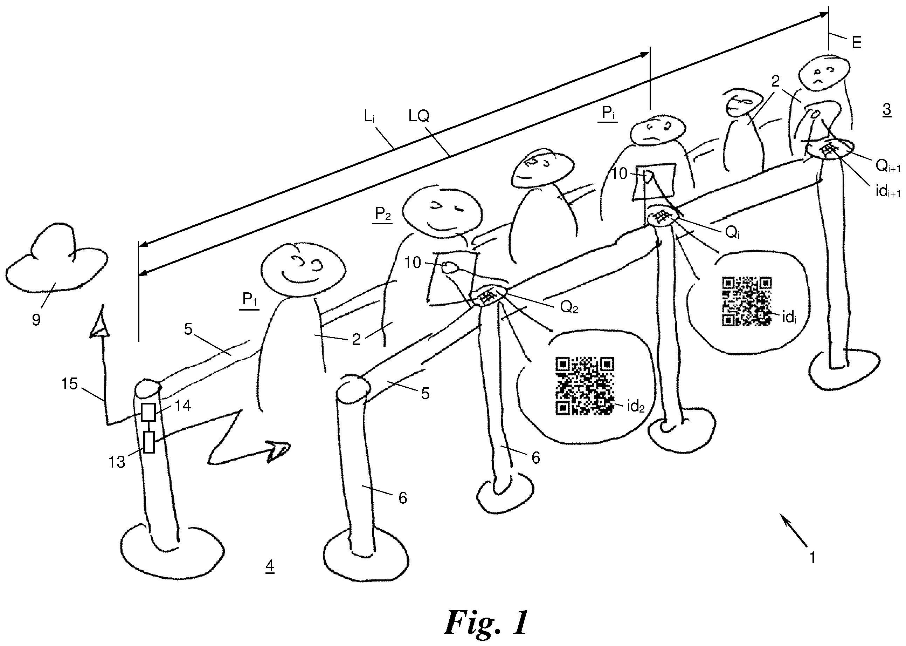

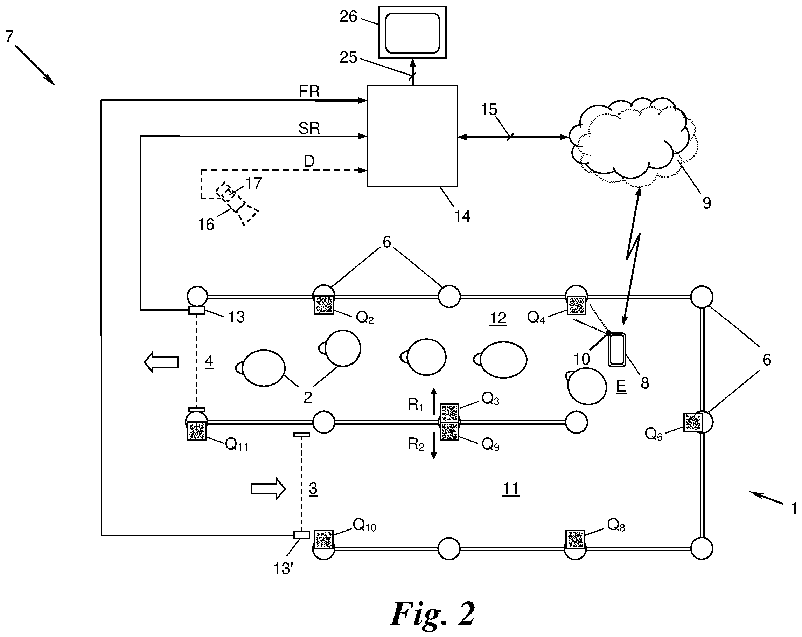

In den Fig. 1 und 2 ist eine Warteschlange 1 von wartenden Personen 2 gezeigt. Die Warteschlange 1 hat einen Ausgang 4 und ein davon entferntes Ende E, d.h. die Personen 2 warten darin vom Ende E bis zum Anfang 4 darauf, den Ausgang 4 verlassen zu dürfen ("first in - first out", FIFO-Prinzip). Beispielsweise befindet sich die Warteschlange 1 vor einem oder mehreren Eingängen einer Veranstaltungshalle, vor einem oder mehreren Schaltern einer Behörde oder eines Kundenbüros, in einer Abfertigungshalle eines Flughafens, z.B. vor einem Flughafengate, vor Kassen in einem Supermarkt, an einer Haltestelle für öffentliche Verkehrsmittel wie Taxis, Busse, Straßenbahnen, Züge, usw.

Es versteht sich, dass in der Warteschlange 1 auch mehrere Personen 2 nebeneinander stehen könnten, und dass auch mehrere Personen 2 den Ausgang 4 gleichzeitig bzw. parallel oder in Gruppen verlassen könnten; all dies ist von den Begriffen "Warteschlange" und "FIFO-Prinzip" hier mitumfasst.

Die Warteschlange 1 kann linear wie in Fig. 1 oder gekrümmt oder mäanderförmig wie in Fig. 2 vom Ende E bis zum Ausgang 4 verlaufen. Die Warteschlange 1 kann sich "frei" bilden, d.h. die Personen 2 warten diszipliniert ohne seitliche Begrenzungen einfach hintereinander, oder sie wird durch Mauern, Wänden, Geländer, Brüstungen, Seile oder wie in dem Beispiel der Fig. 1 und 2 durch Gurtbänder 5 seitlich begrenzt, die zwischen stationären oder transportablen Gurtständern 6 gespannt sind. Die Gurtbänder 5 können abschnittsweise an den Gurtständern 6 aufrollbar gelagert und jeweils an einem benachbarten Gurtständer 6 lösbar verankert sein, wie beispielsweise in der EP 2 937 463 B1 beschrieben, deren Offenbarung hier durch Bezugnahme aufgenommen wird. Die seitlichen Begrenzungen, z.B. die Gurtständer 5, können insbesondere bei kurzen bzw. halbleeren Warteschlangen 1 sehr weit über das aktuelle Ende E der Warteschlange 1 hinausgehen, wie z.B. in Fig. 2 gezeigt. Wo die Begrenzungen enden, entsteht dann ein Eingang 3 für die Warteschlange 1, den die der Warteschlange 1 zuströmenden Personen 2 durchschreiten, bis sie auf das Ende E der Warteschlange auflaufen und dort zu warten beginnen.

In der Warteschlange 1 befinden sich N Personen 2 über eine Länge L zwischen dem Ausgang 4 und dem Ende E. Die Personendichte, also die pro Entfernungseinheit (z.B. Meter) in der Warteschlange 1 befindliche Anzahl an Personen 2, beträgt somit N / L. Erfahrungswerte für die Personendichte D in üblichen Warteschlangen vor z.B. Flughafengates sind 0,5 - 10 Personen/m, insbesondere 1 - 2 Personen/m, z.B. 1,4 Personen/m.

Die aktuelle Rate SR an Personen 2, welche den Ausgang 4 der Warteschlange 1 pro Zeiteinheit (z.B. Sekunde, Minute oder Stunde) verlassen, auch Ausgang-Rate oder "Service Rate" der Warteschlange 1 genannt, hängt in der Regel von der Bedienungs-, Verarbeitungs- bzw. Durchlassgeschwindigkeit jener Einrichtungen ab, vor denen sich die Warteschlange 1 aufbaut, z.B. der Personendurchsatzrate der Eingänge einer Veranstaltungshalle, der Servicierungsrate von Kunden an Schaltern oder Kassen, der Kontrollrate von Personen an einem Gate, und dabei insbesondere auch von der Anzahl an parallelen solchen Einrichtungen nach der Warteschlange 1, z.B. der Anzahl an geöffneten Schaltern, Eingängen usw.

Die Wartezeit $WT_i$ einer bestimmten Person 2 an einem Ort $P_i$ (i = 1, 2, ...) der Warteschlange 1, der sich in einer Entfernung $L_i$ vom Ausgang 4 befindet, beträgt

$$WT_i = N_i / SR \qquad\qquad (1)$$

mit

$N_i$ ... Anzahl an Personen 2, die sich über die Entfernung $L_i$ in der Warteschlange 1 befinden, wobei

$$N_i = L_i * D_i \qquad\qquad (2)$$

ist, mit

$D_i$ ... mittlere Personendichte über die Entfernung $L_i$ (Beispiel: 1,4 Personen/m).

Ist der Ort $P_i$ beispielsweise 10 m vom Ausgang 4 entfernt, befinden sich 14 = 10 m * 1,4/m Personen 2 in der Warteschlange 1 zwischen dem Ort $P_i$ und dem Ausgang 4; und ist die aktuelle Servicerate SR 1 Person/min, dann beträgt die aktuelle Wartezeit $WT_i$ einer Person 2 am Ort $P_i$ 14 : (1/min) = 14 min.

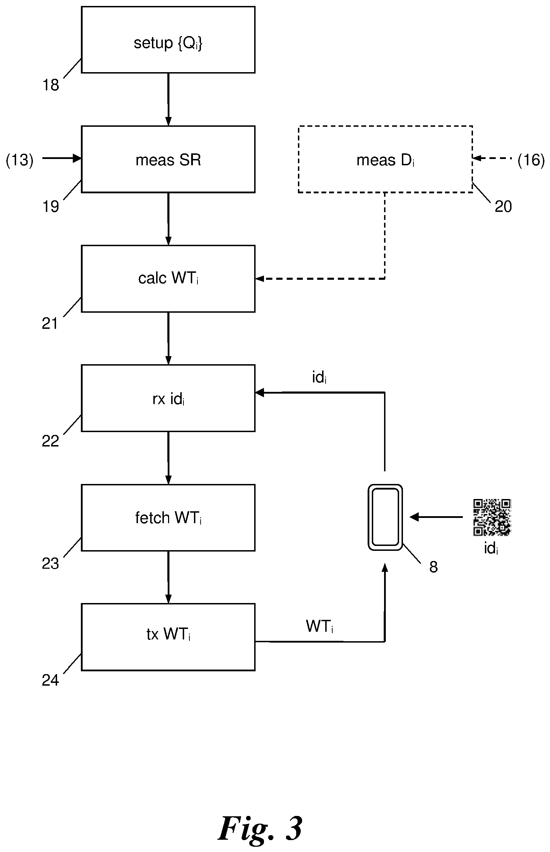

Um den Personen 2 in der Warteschlange 1 die Möglichkeit zu geben, ihre jeweils aktuelle Wartezeit $WT_i$ an einem bestimmten Ort $P_i$ in der Warteschlange 1 zu erfahren, sei es um ihre Ungeduld zu besänftigen oder damit sie sich auf das Verlassen der Warteschlange 1 vorbereiten zu können, dienen die im Folgenden beschriebene Vorrichtung 7 und das anschließend anhand von Fig. 3 beschriebene Verfahren.

Die Vorrichtung 7 arbeitet mit Smart Devices 8, welche von den Personen 2 mitgeführt werden, zusammen, und zwar über ein Funknetz 9 vom Kurzreichweiten-, zellularen oder Langstreckentyp, z.B. ein WLAN-, Bluetooth-, NFC- oder RFID-Netz oder insbesondere ein zellulares Datennetz nach einem der Mobilfunkstandards 3G, 4G, 5G, 6G od.dgl. Die Smart Devices 8 sind demgemäß entsprechende Endgeräte, die mit solchen Funknetzen 9 kommunizieren können, z.B. entsprechende Mobiltelefone, Smartphones, Smartwatches, Smartglasses, z.B. auch für Augmented Reality (AR), aber auch jede andere Art von "Wearables" wie digitale Fitnessarmbänder, digitaler Schmuck, Smart Implants usw.

Die Smart Devices 8 sind jeweils mit einem Lesegerät 10 für maschinenlesbare Datenträger $Q_i$ ausgestattet, genauer zum Lesen einer auf einem solchen Datenträger $Q_i$ gespeicherten Kennung $id_i$. Jeder Datenträger $Q_i$ hat eine eigene, im Rahmen der Vorrichtung 7 eindeutige Kennung $id_i$.

Bei den Datenträger $Q_i$ kann es sich um jede in der Technik bekannte Art von maschinenlesbaren Datenträgern handeln, die mittels Kontakts oder bevorzugt kontaktlos vom Lesegerät 10 eines Smart Device 8 maschinengelesen werden können. Beispiele von Datenträgern $Q_i$ sind Tafeln, Schildchen, Beschriftungen, Gravuren, Klebeetiketten usw. mit optisch lesbaren Kennungen $id_i$. Die dazu passenden Lesegeräte 10 der Smart Devices 8 sind optische Kameras, wie beispielsweise die heutzutage ubiquitären Frontkameras von Smartphones, die als Smart Devices 8 verwendet werden. Oder die Datenträger $Q_i$ sind über Funk auslesbar, z.B. RFID- oder NFC-Tags oder -Etiketten, welche von dazu passenden, in den Smart Devices 8 eingebauten RFID- oder NFC-Lesegeräten 10 hinsichtlich ihrer jeweiligen darin gespeicherten Kennung $id_i$ ausgelesen werden können. Auch jede andere Form von maschineller Auslesung einer auf einem Datenträger $Q_i$ gespeicherten Kennung $id_i$ ist vorstellbar, z.B. auf akustischem Wege, wenn der Datenträger $Q_i$ eine akustische Bake und das Lesegerät 10 ein Mikrofon ist, od.dgl.

Die Vorrichtung 7 umfasst zumindest zwei an unterschiedlichen Positionen $P_i$, d.h. in unterschiedlichen Entfernungen $L_i$ vom Ausgang 4, an der Warteschlange 1 angeordnete Datenträger $Q_i$. In dem in den Fig. 1 und 2 gezeigten Beispiel sind die Datenträger $Q_i$ am oberen Ende der Gurtständer 6 angebracht. Wenn bei einem mäanderförmigen Verlauf der Warteschlange 1 - wie in Fig. 2 gezeigt - ein Gurtständer 6 zwei benachbarte, gegenläufige Abschnitte 11, 12 der Warteschlange 1 abtrennt, können an einem Gurtständer 6 auch (zumindest) zwei in unterschiedliche Richtungen $R_1$, $R_2$ weisende Datenträger $Q_i$ angebracht sein, von denen also der eine zum Abschnitt 11 und der andere zum Abschnitt 12 und damit zu unterschiedlichen Positionen $P_i$ in der Warteschlange 1 weist.

Es versteht sich, dass die Datenträger $Q_i$ auch in anderer Form entlang der Warteschlange 1 montiert werden können, z.B. an Begrenzungspfosten, Geländern, Brüstungen, Mobiliar, Wänden, am Boden, an der Decke oder an Überkopf-Tragstrukturen.

Die auf dem jeweiligen Datenträger $Q_i$ gespeicherte, von diesem zur Maschinenlesung dargebotene Kennung $id_i$ codiert jeweils zumindest die Entfernung $L_i$ dieses Datenträgers $Q_i$ vom Ausgang 4. Im einfachsten Fall gibt die Kennung $id_i$ direkt die Entfernung $L_i$ des Datenträgers $Q_i$ an, z.B. $id_4$ = "4 m". Die Kennung $id_i$ kann jedoch die Entfernung $L_i$ auch indirekt, z.B. in der Form "dritten Gurtständer vor dem Ausgang", angeben, wenn die Aufstellorte bzw. Entfernungen $L_i$ der einzelnen Datenträgern $Q_i$ vorgegeben bzw. vorbekannt und in einem Speicher der Vorrichtung 7 hinterlegt sind.

Optional kann die Kennung $id_i$ zusätzlich eine Webadresse der Recheneinheit 14 im Internet kodieren, unter der die Wartezeit $WT_2$ am Ort $P_2$ des jeweiligen Datenträgers $Q_i$ über das Funknetz 9 abgefragt werden kann.

In dem in Fig. 1 gezeigten Beispiel ist die als QR-Code ausgeführte Kennung $id_2$ des am zweiten Gurtständer 6 vor dem Ausgang 4 angebrachten Datenträgers $Q_2$:

$$id_2 = \texttt{https://qmetrix.com\textbackslash wt?loc=VIE\&qu=7\&st=2}$$

und identifiziert damit den zweiten Gurtständer (stanchion = 2) in der siebten Warteschlange (queue = 7) am Installationsort "Vienna International Airport" (loc = VIE) sowie die Webadresse "qmetrix.com" der Recheneinrichtung 14.

Die Kennung $id_i$ des am dritten Gurtständer 6 vor dem Ausgang 4 angebrachten Datenträgers $Q_i$ ist:

$$id_i = \texttt{https://qmetrix.com\textbackslash wt?loc=VIE\&qu=7\&st=3}$$

und identifiziert somit am Ort VIE in der Warteschlange Nr. 7 den Gurtständer Nr. 3.

Zusätzlich zu den Datenträgern $Q_i$ umfasst die Vorrichtung 7 eine Erfassungseinrichtung 13 zum Erfassen der aktuellen Ausgangs-Rate SR der Warteschlange 1.

Die Erfassungseinrichtung 13 kann beispielsweise einfach die Anzahl an verfügbaren Schaltern, Durchgängen oder Verkehrsmitteln usw. nach dem Ausgang 4 erfassen. Die Erfassungseinrichtung 13 kann dazu mit solchen Schalter-, Durchgangs- bzw. Verkehrssystemen auch elektronisch verbunden oder sogar Teil derselben sein, z.B. Teil eines elektronischen Aufrufsystems sein, mit dem Schalterpersonal die Wartenden zum Verlassen der Warteschlange 1 aufruft und das deshalb selbst die Ausgangs-Rate SR erfasst, oder Teil eines elektronischen Verkehrssteuerungssystems, welches die verfügbaren Verkehrsmittel steuert oder detektiert und so die Ausgangs-Rate SR erfasst.

Die Erfassungseinrichtung 13 kann aber auch am Ausgang 4 der Warteschlange 1 angeordnet sein und dort direkt die aktuelle Ausgangs-Rate SR der Warteschlange 1 messen. Die Erfassungseinrichtung 13 kann dazu beispielsweise eine Lichtschranke, ein Drehkreuz, ein Näherungssensor, eine Kamera, eine Trittschaltermatte oder jede andere Form von Einrichtung sein, welche die Anzahl an den Ausgang 4 pro Zeiteinheit verlassenden Personen 2 messen kann.

An die Erfassungseinrichtung 13 ist eine Recheneinrichtung 14 angeschlossen. Die Recheneinrichtung 14 steht über eine Schnittstelle 15 mit dem Funknetz 9 in Verbindung und kann über dieses mit den Smart Devices 8 kommunizieren. Ein Smart Device 8 kann so über das Funknetz 9 und die Schnittstelle 15 Daten von der Recheneinrichtung 14 erhalten ("push") oder abfragen ("pull"). Die Schnittstelle 15 kann eine beliebige Datenverbindung zwischen der Recheneinheit 14 und dem Funknetz 9 sein, z.B. eine Datenverbindung über das Internet.

Die Recheneinrichtung 14 berechnet für jeden Datenträger $Q_i$, genauer für dessen (ungefähren) Ort $P_i$ in der Warteschlange 1 bzw. dessen (ungefähre) Entfernung $L_i$ vom Ausgang 4 der Warteschlange 1, die jeweils (ungefähre) aktuelle datenträgerortsspezifische Wartezeit $WT_i$, u.zw. abhängig von der von der Erfassungseinrichtung 13 (zumindest annähernd) aktuell erfassten Ausgangs-Rate SR gemäß den obigen Gleichungen (1) und (2) zu $WT_i = (L_i * D_i) / SR$.

Die dabei verwendete Personendichte $D_i$ zwischen dem jeweiligen Datenträger $Q_i$ und dem Ausgang 4 kann ein Erfahrungs- bzw. Schätzwert und vorgegeben sein, wie 1 - 10 Personen/m, z.B. 1,4 Personen/m, usw. Optional kann die Personendichte $D_i$ mithilfe einer an die Recheneinrichtung 14 angeschlossenen Zähleinrichtung 16 jeweils aktuell gemessen werden.

Die Zähleinrichtung 16 kann von jeder in der Technik bekannten Art sein, beispielsweise eine Reihe von Trittschaltermatten am Boden der Warteschlange 1, eine Reihe von Näherungssensoren oder Lichtschranken oder - wie gezeigt - eine Kamera mit Bildverarbeitungsmitteln 17 zur Personenzählung im Kamerabild, wenn die Kamera auf die Warteschlange 1 gerichtet ist.

Die Zähleinrichtung 16 kann optional für jeden Datenträger $Q_i$, d.h. für jede Entfernung $L_i$, eine individuelle Personendichte $D_i$ bzw. individuelle Anzahl an Personen 2, die sich über die Entfernung $L_i$ der Warteschlange 1 zwischen dem jeweiligen Datenträger $Q_i$ und dem Ausgang 4 befinden, messen. Dadurch können auch Staus in der Warteschlange 1, die zu lokalen Dehnungen und Stauchungen in der Warteschlange 1 führen, berücksichtigt werden.

Die von der Vorrichtung 7 berechneten und bereitgestellten aktuellen Wartezeiten $WT_i$ können nun von den Personen 2 jeweils mit deren Smart Device 8 abgefragt und auf diesem zur Ausgabe gebracht werden. Dazu liest eine Person 2 die Kennung $id_i$ des jeweils ihr nächstgelegenen Datenträgers $Q_i$ mit dem Lesegerät 10 ihres Smart Device 8, und dieses sendet die gelesene Kennung $id_i$ über das Funknetz 9 an die Recheneinrichtung 14. Die Recheneinrichtung 14 gibt daraufhin die unter der Kennung $id_i$ bereitgehaltene, d.h. für den Datenträger $Q_i$ berechnete aktuelle Wartezeit $WT_i$ über das Funknetz 9 an das abfragende Smart Device 8 zurück. Die an einer bestimmten Position $P_i$ in der Warteschlange 1 wartende Person 2 braucht somit nur den nächstbesten Datenträger $Q_i$ mit ihrem Smart Device 8 abscannen und erhält unmittelbar darauf von der Recheneinrichtung 14 ihre aktuelle, serviceratenabhängige Wartezeit $WT_i$ am Ort $P_i$.

Die Recheneinrichtung 14 kann die datenträgerortsspezifischen Wartezeiten $WT_i$ "auf Vorrat" berechnen und für abfragende Smart Devices 8 bereithalten, auch periodisch aktualisiert entsprechenden jeweils aktuellen Erfassungen der Erfassungseinrichtung 13 und optional der Zähleinrichtung 14. Das Bereithalten von - in der Zeitgranularität der Erfassungsperiodizität der Erfassungseinrichtung 13 bzw. Zähleinrichtung 14 - aktuell vorberechneten Wartezeiten

$WT_i$ spart Rechenressourcen in der Recheneinrichtung 14, wenn mit einer großen Anzahl an abfragenden Smart Devices 8 zu rechnen ist. Alternativ könnte die Recheneinrichtung 14 aber auch die jeweiligen Wartezeiten $WT_i$ erst auf Abfrage durch ein Smart Device 8 hin berechnen; optional können dazu auch erst die entsprechende Erfassungen der Erfassungseinrichtung 13 und/oder Zähleinrichtung 14 veranlasst werden, um die Aktualität der Wartezeitberechnung zu verbessern.

Fig. 3 zeigt verschiedene Ausführungsformen des von der Vorrichtung 7 - im Zusammenspiel mit einem beispielhaften Smart Device 8 und dem Funknetz 9 - ausgeführten Verfahrens. In einem ersten Schritt 18 werden die Datenträger $Q_i$ in unterschiedlichen Entfernungen $L_i$ vom Ausgang 4 angeordnet, z.B. auf Begrenzungsgeländern, -pfosten, Gurtständern 6, Wänden, Böden, Decken usw. entlang der Warteschlange 1 verteilt. Im gezeigten Beispiel trägt jeder Datenträger $Q_i$ seine Kennung $id_i$ in Form eines kameralesbaren QR-Codes oder Barcodes.

Im Schritt 19 wird die Ausgangs-Rate SR der Warteschlange 1 von der Erfassungseinrichtung 13 erfasst. In einem optionalen Schritt 20 kann auch die Personendichte D bzw. die zwischen Datenträgern $Q_i$ und Ausgang 4 auftretende Personendichte $D_i$ mittels der Zähleinrichtung 16 gemessen werden.

Auf Grundlage der erfassten Rate SR und der optional gemessenen Personendichte D bzw. $D_i$ kann nun im Schritt 21 die Recheneinrichtung 14 für (zumindest) einen bestimmten Datenträger $Q_i$ oder für jeden Datenträger $Q_i$ der Menge aller Datenträger $\{Q_i\}$ die jeweilige datenträgerortsspezifische aktuelle Wartezeit $WT_i$ berechnen wie oben erläutert. Die berechnete(n) Wartezeit(en) $WT_i$ steht/stehen nun in der Vorrichtung 7, z.B. in einem Speicher der Recheneinrichtung 14, zur Ausgabe über das Funknetz 9 an ein Smart Device 8 bereit, sei es zur Abfrage ("pull") durch das Smart Device 8 oder zur unmittelbaren Versendung an dieses ("push").

Im "pull-Fall" empfängt die Recheneinrichtung 14 in einem Schritt 22 die von einem Smart Device 8 maschinengelesene Kennung $id_i$ eines Datenträgers $Q_i$, sucht in einem Schritt 23 die für diese Kennung $id_i$ berechnete Wartezeit $WT_i$ aus ihrem Speicher heraus und versendet sie in einem Schritt 24 über das Funknetz 9 an das abfragende Smart Device 8. Im "push"-Fall könnten die Schritte 22 und 23 entfallen und die berechnete(n) Wartezeit(en) $WT_i$ an mit der Vorrichtung 7 über das Funknetz 9 verbundene ("eingeloggte") Smart Devices 8 direkt versandt werden (Schritt 24).

Die Reihenfolge der Schritte 19 - 24 kann für andere Ausführungsformen verändert werden und einzelne Schritte können auch entfallen. Wenn beispielsweise die Wartezeiten $WT_i$ nicht vorberechnet sondern erst auf Abfrage durch ein Smart Device 8 berechnet werden, dann könnte Schritt 21 nach Schritt 22 stattfinden und optional Schritt 23 entfallen. In einer anderen Ausführungsform könnten der Erfassungsschritt 19 und der optionale Zählschritt 20 auch erst nach dem Abfrageschritt 22 stattfinden, gefolgt von dem Berechnungsschritt 21, und Schritt 23 dann wieder optional entfallen.

Ferner versteht es sich, dass die Erfassungs- und Zählschritte 19, 20 fortlaufend oder periodisch wiederholt werden können, insbesondere wenn die Wartezeiten $WT_i$ im Schritt 21 vorberechnet und für die Schritte 22 - 24 in der Vorrichtung 7 bereitgehalten werden. Beispielsweise könnten dann die Schritte 19 - 21 periodisch in einer Schleife wiederholt werden, während die Abfrage- und Versendeschritte 22 - 24 als paralleler Prozess, der jeweils auf den aktuellen Stand der Schleife 19 - 21 zugreift, ausgeführt werden.

Die Recheneinrichtung 14 kann mit der Erfassungseinrichtung 13 und der optionalen Zähleinrichtung 16 vor Ort verbunden sein, beispielsweise direkt in die Erfassungseinrichtung 14 am Ausgang 4 der Warteschlange 1 integriert. Alternativ ist die Recheneinrichtung 14 örtlich von den Erfassungs- und/oder Zähleinrichtungen 13, 16 getrennt und mit diesen über eine Datenverbindung, z.B. das Internet, verbunden. Beispielsweise ist die Recheneinrichtung 14 ein Webserver, der über eine Internetverbindung mit der Erfassungseinrichtung 13 (und optional der Zähleinrichtung 16) sowie über eine weitere Internetverbindung als Schnittstelle 15 und das Mobilfunknetz 9 mit den Smart Devices 8 in Verbindung treten kann.

Das Einlangen der von den Smart Devices 8 maschinengelesenen Kennungen $id_i$ in der Recheneinrichtung 14 kann in weiterer Folge dazu verwendet werden, Information über den Zustand der Warteschlange 1 wie die Verteilung der Personen 2 darin und insbesondere die Länge LQ der Warteschlange 1 zu erhalten. Diese Information kann vom Betreiber der Warteschlange 1 bzw. der nach dem Ausgang 4 liegenden Einrichtungen, z.B. Kunden-, Behörden- oder Abfertigungsschalter, Ein- bzw. Durchgänge, Kassen, Verkehrsmittel usw., z.B. dazu verwendet werden, je nach Bedarf Schalter, Kassen, Durchgänge od.dgl. zu öffnen oder zu schließen oder Verkehrsmittel bereitzustellen, zu takten oder zu planen. Die Fig. 1, 2 und 4 bis 6 beschreiben die um diese Funktionalität erweiterte Vorrichtung 7 und ein Verfahren zum Messen der Länge LQ der Warteschlange 1.

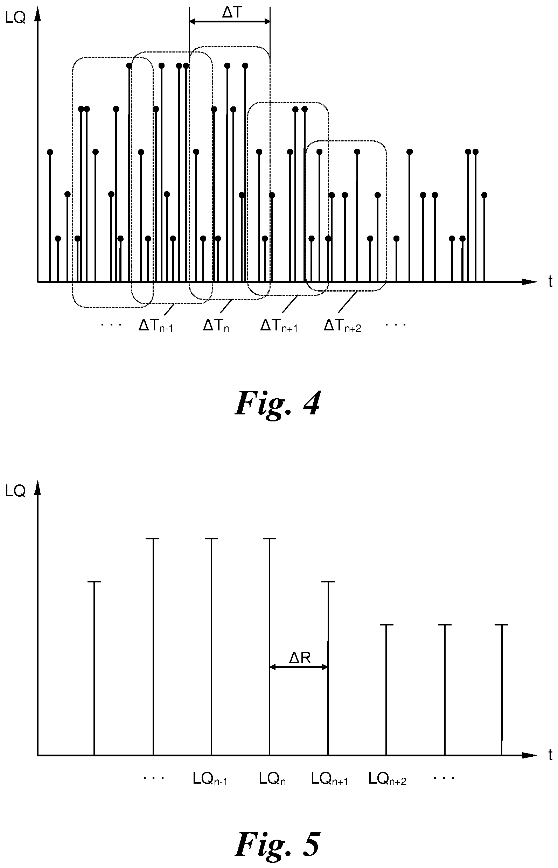

Für die Vorrichtung 7 mit Warteschlangen-Längenmessfunktion sowie das anhand der Fig. 4 bis 6 beschriebene Verfahren ist es nicht zwingend notwendig, dass die Personen 2 beim Abscannen eines Datenträgers $Q_i$ als Antwort von der Recheneinrichtung 14 ihre persönliche aktuelle Wartezeit $WT_i$ erhalten. Vielmehr kann durch Maschinenlesen der Kennung $id_i$ eines Datenträgers $Q_i$ jede beliebige Information bzw. jeder beliebige Content von der Recheneinrichtung 14 über das Funknetz 9 erhalten und auf dem Smart Device 8 angezeigt werden, beispielsweise Nachrichten, Audio- und/oder Video-Sniplets zur Unterhaltung, Werbung, Finanzinformation wie Kontostände, Rabattmarken oder Informationen über Rabattaktionen, Vielfliegermeilen-Gutschriften, Fahrplaninformationen, z.B. über die zu erwartende Ankunft des nächsten Verkehrsmittels an einer Haltstelle usw. Der jeweils einem Datenträger $Q_i$ erhaltbare Content wird beispielsweise durch eine in der Nähe der Warteschlange 1 oder des Datenträgers $Q_i$ angebrachte Informationstafel bekanntgegeben, in der Art von: "Scannen Sie hier, um Ihre persönliche Wartezeit an diesem Punkt in Erfahrung zu bringen", "Scannen Sie hier, um über Fahrplanverzögerungen informiert zu werden", "Scannen Sie hier, um die erwartete Ankunftszeit des nächsten Busses in Erfahrung zu bringen", "Scannen Sie hier, um 5 Bonusmeilen zu erhalten", "Scannen Sie hier, um 5% auf Ihren Einkauf an dieser Kasse zu erhalten", "Scannen Sie hier, um Pre-Releases der neuesten Musikvideos von Adele und Ed Sheeran zu sehen", od.dgl.

Die Messung der Länge LQ der Warteschlange 1 beruht auf der statistisch validen Annahme, dass Personen 2, die der Warteschlange 1 zuströmen und auf das Ende E der Warteschlange 1 auflaufen, dort, wo sie nun erstmals Zeit und Muße haben, den nächstgelegenen Datenträger $Q_i$ mit ihrem Smart Device 8 maschinenlesen und dadurch gleichzeitig die Kennung $id_i$ dieses Datenträgers $Q_i$ der Recheneinrichtung mitteilen; ebenso wie viele andere Personen 2 in der Warteschlange 1, die zu zufälligen Zeitpunkten irgendeinen der Datenträger $Q_i$ zwischen dem Ende E und dem Ausgang 4 der Warteschlange 1 abscannen.

Fig. 4 zeigt die auf diese Weise in der Recheneinrichtung 14 über die Zeit t empfangenen, also von Smart Devices 8 maschinengelesenen und über das Funknetz 9 gesendeten, Kennungen $id_i$, genauer die von diesen jeweils codierte AusgangsEntfernung $L_i$. Wie ersichtlich langen Kennungen $id_i$ bzw. Entfernungen $L_i$ zu zufälligen Zeitpunkten unregelmäßig zeitlich verteilt ein.

Für eine Messung der aktuellen Länge LQ der Warteschlange 1 zu einem ausgewählten Zeitpunkt $t_n$, im weiteren Längenmessung $LQ_n$ genannt, legt die Recheneinrichtung 14 ein Zeitfenster $\Delta T_n$ der Länge $\Delta T$ an das Empfangssignal von Fig. 4 an. Das Zeitfenster $\Delta T_n$ für die Längenmessung $LQ_n$ erstreckt sich vom Zeitpunkt $t_n$ (oder kurz davor) zurück und über die in diesem Zeitfenster $\Delta T_n$ empfangenen Kennungen $id_i$ bzw. die von diesen kodierten Entfernungen $L_i$.

Jedes Zeitfenster $\Delta T_n$ kann dieselbe Länge $\Delta T$ haben oder eine individuelle Länge, falls aufeinanderfolgende Längenmessungen $LQ_n$ an unterschiedliche Messanforderungen angepasst sein sollen, z.B. hohe Ortsauflösung oder hohe Zeitauflösung, wie eingangs und später ausführlicher erläutert.

Unter den im Zeitfenster $\Delta T_n$ empfangene Kennungen $id_i$ bzw. liegenden Entfernungen $L_i$ wählt die Recheneinrichtung 14 nun die größte Entfernung $LQ_n = \max(L_i)_{\Delta T_n}$ aus. Das Zeitfenster $\Delta T_n$ kann somit auch als "gliding maximum window" betrachtet werden. Die Recheneinrichtung 14 kann die gemessenen Längen $LQ_n$ der Warteschlange 1 auf einem Ausgang 25 ausgeben, beispielsweise zur Anzeige auf einem Bildschirm 26.

Fig. 5 zeigt eine solcherart erzeugte Folge von jeweils zu einem Messzeitpunkt $t_n$ über ein vergangenes Zeitfenster $\Delta T_n$ gemessenen Längen $LQ_n$ der Warteschlange 1 über der Zeit t. Wie ersichtlich kann die Länge LQ der Warteschlange 1 im zeitlichen Verlauf anwachsen oder abschmelzen. Die Zeitabstände $\Delta R$ zwischen aufeinanderfolgenden Messungen $LQ_n$ und $LQ_{n+1}$ können beliebig und unabhängig von den Zeitfenstern $\Delta T_n$ gewählt werden, sodass sich die Zeitfenster $\Delta T_n$ überlappen können oder nicht.

Die Länge der Zeitfenster $\Delta T_N$ ist nach oben durch die zeitliche Auflösung limitiert, mit der dynamische Veränderungen der Warteschlangenlänge LQ - Anwachsen und Abschmelzen - erfasst werden können. Je kürzer die Zeitfenster $\Delta T_n$, desto rascher kann die Längenmessung dynamischen Längenänderungen der Warteschlange 1 folgen. Anderseits wird die Kürze der Zeitfenster $\Delta T_n$ durch die gewünschte Ortsauflösung der Längenmessungen $LQ_n$ begrenzt. Je länger die Zeitfenster $\Delta T_n$ sind, desto größer ist die statistische Wahrscheinlichkeit, dass der dem Ende E der Warteschlange 1 nächstgelegene Datenträger $Q_i$ mindestens einmal von einer dort wartenden Personen 2 gescannt wird.

Ein optimaler Kompromiss zwischen Zeitauflösung bzw. dynamischer Reaktionsfähigkeit der Längenmessung einerseits und Ortsauflösung bzw. Längenmessgenauigkeit anderseits ergibt sich, wenn jedes Zeitfenster $\Delta T_n$ etwa gleich dem Wert

$$\Delta T_{opt} = (\Delta L \cdot D) / (SR + FR) \qquad (3)$$

gewählt wird, mit

$\Delta L$ durchschnittlicher Abstand zwischen zwei benachbarten Datenträgern $Q_i$,
D durchschnittliche Anzahl von Personen 2 pro Längeneinheit in der Warteschlange 1,
FR Rate an pro Zeiteinheit dem Ende 3 der Warteschlange 1 zuströmenden Personen 2, und
SR Rate an pro Zeiteinheit den Ausgang 4 der Warteschlange 1 verlassenden Personen 2.

Die Zustromrate FR, auch "Arrival Rate" oder "Access Rate" der Warteschlange 1 genannt, kann in derselben Weise ermittelt werden wie zuvor für die Ausgangs-Rate SR beschrieben, also beispielsweise durch Erfahrungswert, Schätzung oder eine eigene Erfassungseinrichtung 13' am Eingang 3 ähnlich der Erfassungseinrichtung 13 am Ausgang 4.

Wenn eines der beiden gegensätzlichen Messziele - Ortsauflösung und Zeitauflösung - favorisiert werden soll, können für eine erhöhte Ortsauflösung die Zeitfenster $\Delta T_n$ über dem Wert $\Delta T_{opt}$ und für eine erhöhte Zeitauflösung unter dem Wert $\Delta T_{opt}$ gewählt werden, beispielsweise im Bereich von $0{,}1 \cdot \Delta T_{opt}$ bis $10 \cdot \Delta T_{opt}$ und insbesondere im Bereich von $0{,}5 \cdot \Delta T_{opt}$ bis $2 \cdot \Delta T_{opt}$.

Da der Wert $\Delta T_{opt}$ von der Personendichte D, der ZustromRate FR und der Ausgangs-Rate SR abhängig ist, folgen die Zeitfenster $\Delta T_n$, wenn sie dem Wert $\Delta T_{opt}$ entsprechend gewählt werden, allen Änderungen von D, FR und SR. Wenn für ein oder mehrere Längenmessungen $LQ_n$ somit jeweils aktuelle Schätz- oder Messwerte von D, FR und/oder SR verwendet werden, dann sind deren Zeitfenster $\Delta T_n$ gleichsam selbst-kalibrierend bzw. adaptiv.

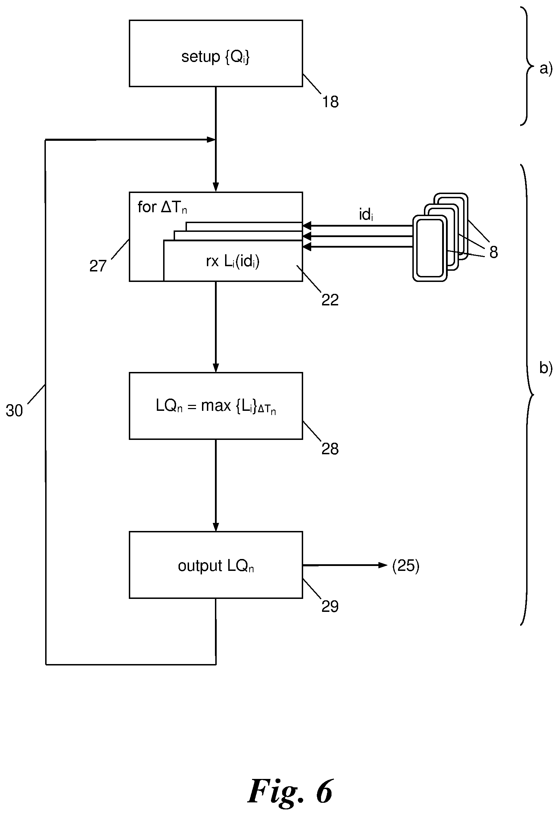

Fig. 6 zeigt das mithilfe der Vorrichtung 7 ausgeführte Verfahren zum Messen der Länge LQ der Warteschlange 1 bzw. einer Folge $\{LQ_n\}$ von in Zeitabständen $\Delta R$ aufeinanderfolgenden Längenmessungen $LQ_n$ in Form eines Flussdiagramms.

Die erste Phase a) des Verfahrens umfasst den Schritt 18 des Anordnens der Datenträger $Q_i$ wie für das Verfahren von Fig. 3 beschrieben.

In der zweiten Phase b) des Verfahrens werden in einem ersten Schritt 27 in der Recheneinrichtung 14 zunächst die in einem Zeitfenster $\Delta T_n$ einlangenden, d.h. über das Funknetz 9 und die Schnittstelle 15 empfangenen, Kennungen $id_i$ bzw. gleich die von diesen codierten Entfernungen $L_i$ empfangen und gesammelt. Der Schritt 27 umfasst somit eine Mehrzahl der Empfangsschritte 22 des Verfahrens von Fig. 3, sodass auch auf deren Beschreibung verwiesen wird.

In einem anschließenden Schritt 28 wählt die Recheneinrichtung 14 die größte Entfernung unter allen im Zeitfenster $\Delta T_n$ gesammelten Entfernungen $(L_i)_{\Delta T_n}$ als Längenmessung $LQ_n$ aus, d.h.

$$LQ_n \;=\; \max\{L_i\}_{\Delta T_n} \qquad\qquad (4)$$

Im folgenden Schritt 29 wird die so gemessene Länge $LQ_n$ auf der Schnittstelle 25 der Recheneinrichtung 14 ausgegeben, z.B. zur Anzeige auf dem Bildschirm 26.

Die Phase b) des Verfahrens kann in einer Schleife 30 in regelmäßigen oder unregelmäßigen Zeitabständen $\Delta R$ ein oder mehrmals wiederholt werden, um die in Fig. 5 dargestellte Folge $\{LQ_n\}$ von Längenmessungen $LQ_n$ der Warteschlange 1 zu erzeugen.

Die Erfindung ist nicht auf die dargestellten Ausführungsformen beschränkt, sondern umfasst alle Varianten, Modifikationen und Kombinationen von Ausführungsformen, die in den Rahmen der angeschlossenen Ansprüche fallen.

**Patentansprüche**

1.  Vorrichtung zum Messen der Länge einer Warteschlange von Personen, die einen Ausgang und ein davon entferntes Ende hat, **gekennzeichnet durch**:

    zumindest zwei an der Warteschlange (1) in unterschiedlichen Entfernungen ($L_i$) vom Ausgang (4) angeordnete Datenträger ($Q_i$) mit jeweils einer eindeutigen, von einem Smart Device (8) einer wartenden Person (2) maschinenlesbaren Kennung ($id_i$), welche die Entfernung ($L_i$) dieses Datenträgers ($Q_i$) vom Ausgang (4) kodiert; eine Recheneinrichtung (14) mit einer Schnittstelle (15), über die sie von Smart Devices (8) maschinengelesene und über ein Funknetz (9) gesendete Kennungen ($id_i$) empfangen kann; wobei die Recheneinrichtung (14) dafür ausgebildet ist, aus allen Entfernungen ($L_i$), die von den in einem vorgegebenen Zeitfenster ($\Delta T_n$) empfangenen Kennungen ($id_i$) kodiert werden, die größte Entfernung auszuwählen und als Länge ($LQ_n$) der Warteschlange (1) auszugeben.

2.  Vorrichtung nach Anspruch 1, **dadurch gekennzeichnet, dass** die Datenträger ($Q_i$) in annähernd gleichen Abständen ($\Delta L$) entlang der Warteschlange (1) verteilt angeordnet sind.

3.  Vorrichtung nach Anspruch 1 oder 2, **dadurch gekennzeichnet, dass** das vorgegebene Zeitfenster ($\Delta T_n$) ein Zehntel bis das Zehnfache, bevorzugt die Hälfte bis das Doppelte, besonders bevorzugt das Einfache, des Werts

$$\Delta T_{opt} \;=\; (\Delta L \;\cdot\; D) \;/\; (SR \;+\; FR)$$

    ist, mit

    $\Delta L$ durchschnittlicher Abstand zwischen zwei benachbarten Datenträgern ($Q_i$),
    D durchschnittliche Anzahl von Personen (2) pro Längeneinheit in der Warteschlange (1),
    FR Rate an pro Zeiteinheit dem Ende (3') der Warteschlange (1) zuströmenden Personen (2),
    SR Rate an pro Zeiteinheit den Ausgang (4) der Warteschlange (1) verlassenden Personen (2).

4.  Vorrichtung nach einem der Ansprüche 1 bis 3, **dadurch gekennzeichnet, dass** jeder Datenträger ($Q_i$) seine

Kennung ($id_i$) in Form eines kameralesbaren QR-Codes oder Barcodes trägt.

5. Vorrichtung nach einem der Ansprüche 1 bis 4, **dadurch gekennzeichnet, dass** jede Kennung ($id_i$) eine Webadresse der Recheneinrichtung (14) enthält.

6. Vorrichtung nach einem der Ansprüche 1 bis 5, **dadurch gekennzeichnet, dass** zumindest ein Datenträger ($Q_i$) an einem Gurtständer (6) oder Begrenzungspfosten für die Warteschlange (1) angebracht ist.

7. Vorrichtung nach Anspruch 6, **dadurch gekennzeichnet, dass** zumindest ein Gurtständer (6) bzw. Begrenzungspfosten mit zumindest zwei in unterschiedliche Richtungen ($R_1$, $R_2$) weisenden Datenträgern ($Q_i$) versehen ist.

8. Vorrichtung nach einem der Ansprüche 1 bis 7, **dadurch gekennzeichnet, dass** die Recheneinrichtung (14) ferner dafür ausgebildet ist, für zumindest einen Datenträger ($Q_i$) aus seiner Entfernung ($L_i$) vom Ausgang (4) und der aktuellen Rate ($SR$) an pro Zeiteinheit den Ausgang (4) verlassenden Personen (2) eine datenträgerortsspezifische aktuelle Wartezeit ($WT_i$) zu berechnen und unter seiner Kennung ($id_i$) zur Ausgabe über ein Funknetz (9) an ein Smart Device (8) bereitzustellen.

9. Vorrichtung nach Anspruch 8, **dadurch gekennzeichnet, dass** die Recheneinrichtung (14) dafür ausgebildet ist, die von einem Smart Device (8) maschinengelesene Kennung ($id_i$) über das Funknetz (9) zu empfangen und die unter dieser Kennung bereitgestellte aktuelle Wartezeit ($WT_i$) über das Funknetz (9) an dieses Smart Device (8) zur Ausgabe darauf zu senden.

10. Verfahren zum Messen der Länge einer Warteschlange von Personen, die einen Ausgang und ein davon entferntes Ende hat, umfassend die Schritte:

a) Anordnen zumindest zweier Datenträger ($Q_i$) an der Warteschlange (1) in unterschiedlichen Entfernungen ($L_i$) vom Ausgang (4), wobei jeder Datenträger ($Q_i$) eine eindeutige, von einem Smart Device (8) einer wartenden Person (2) maschinenlesbare Kennung ($id_i$) hat, welche die Entfernung ($L_i$) dieses Datenträgers ($Q_i$) vom Ausgang (4) kodiert;

b) in einer Recheneinrichtung (14): Empfangen von von Smart Devices (8) maschinengelesenen und über ein Funknetz (9) gesendeten Kennungen ($id_i$) über ein vorgegebenes Zeitfenster ($\Delta T_n$), Auswählen der größten Entfernung aus allen Entfernungen ($L_i$), die von den im Zeitfenster ($\Delta T_n$) empfangenen Kennungen ($id_i$) kodiert werden, und Ausgeben der ausgewählten Entfernung als Länge ($LQ_n$) der Warteschlange (1).

11. Verfahren nach Anspruch 10, **dadurch gekennzeichnet, dass** die Datenträger ($Q_i$) in annähernd gleichen Abständen ($\Delta L$) entlang der Warteschlange (1) verteilt angeordnet werden.

12. Verfahren nach Anspruch 10 oder 11, **dadurch gekennzeichnet, dass** das vorgegebene Zeitfenster ($\Delta T_n$) ein Zehntel bis das Zehnfache, bevorzugt die Hälfte bis das Doppelte, besonders bevorzugt das Einfache, des Werts

$$\Delta T_{opt} \;=\; (\Delta L \,\cdot\, D) \;/\; (SR \,+\, FR) \qquad\qquad (3)$$

ist, mit

$\Delta L$ durchschnittlicher Abstand zwischen zwei benachbarten Datenträgern ($Q_i$),
$D$ durchschnittliche Anzahl von Personen (2) pro Längeneinheit in der Warteschlange (1),
$FR$ Rate an pro Zeiteinheit dem Ende (3') der Warteschlange (1) zuströmenden Personen (2),
$SR$ Rate an pro Zeiteinheit den Ausgang (4) der Warteschlange (1) verlassenden Personen (2).

13. Verfahren nach einem der Ansprüche 10 bis 12, **dadurch gekennzeichnet, dass** jeder Datenträger ($Q_i$) seine Kennung ($id_i$) in Form eines kameralesbaren QR-Codes oder Barcodes trägt.

14. Verfahren nach einem der Ansprüche 10 bis 13, **dadurch gekennzeichnet, dass** jede Kennung ($id_i$) eine Webadresse der Recheneinrichtung (14) enthält.

15. Verfahren nach einem der Ansprüche 10 bis 14, **dadurch gekennzeichnet, dass** Schritt b) in Zeitabständen zumindest einmal wiederholt wird.

**Claims**

1. A device for measuring the length of a queue of persons which has an exit and an end distanced therefrom, **characterized by**:

   at least two data carriers ($Q_i$) arranged at the queue (1) at different distances ($L_i$) from the exit (4), each having a unique identifier ($id_i$) which is machine-readable by a smart device (8) of a waiting person (2) and which codifies the distance ($L_i$) of this data carrier ($Q_i$) from the exit (4);
   a computing equipment (14) having an interface (15) via which it can receive identifiers ($id_i$) machine-read and sent via a radio network (9) by smart devices (8);
   wherein the computing equipment (14) is configured to select, from all the distances ($L_i$) which are codified by the identifiers ($id_i$) received in a predetermined time window ($\Delta T_n$), the greatest distance and to output it as the length ($LQ_n$) of the queue (1).

2. The device according to claim 1, **characterised in that** the data carriers ($Q_i$) are arranged along the queue (1) distributed at approximately equal intervals ($\Delta L$).

3. The device according to claim 1 or 2, **characterised in that** the predetermined time window ($\Delta T_n$) is a tenth to ten times, preferably half to twice, particularly preferably one time, the value

$$\Delta T_{opt} = (\Delta L \cdot D) / (SR + FR)$$

   with

   $\Delta L$ average distance between two adjacent data carriers ($Q_i$),
   D average number of persons (2) per unit of length in the queue (1),
   FR rate of persons (2) arriving at the end (3') of the queue (1) per unit of time,
   SR rate of persons (2) leaving the exit (4) of the queue (1) per unit of time.

4. The device according to any one of claims 1 to 3, **characterised in that** each data carrier ($Q_i$) carries its identifier ($id_i$) in the form of a camera-readable QR code or barcode.

5. The device according to any one of claims 1 to 4, **characterised in that** each identifier ($id_i$) contains a web address of the computing equipment (14).

6. The device according to any one of claims 1 to 5, **characterised in that** at least one data carrier ($Q_i$) is attached to a belt stand (6) or boundary post for the queue (1).

7. The device according to claim 6, **characterised in that** at least one belt stand (6) or boundary post, respectively, is provided with at least two data carriers ($Q_i$) pointing in different directions ($R_1$, $R_2$).

8. The device according to any one of claims 1 to 7, **characterised in that** the computing equipment (14) is further configured to calculate, for at least one data carrier ($Q_i$), from its distance ($L_i$) from the exit (4) and the current rate (SR) of persons (2) leaving the exit (4) per unit of time, a data-carrier-location-specific current waiting time ($WT_i$) and to provide it under its identifier ($id_i$) for output via a radio network (9) to a smart device (8).

9. The device according to claim 8, **characterised in that** the computing equipment (14) is configured to receive the identifier ($id_i$) machine-read by a smart device (8) via the radio network (9) and to send the current waiting time ($WT_i$) provided under this identifier via the radio network (9) to this smart device (8) for output thereon.

10. A method for measuring the length of a queue of persons which has an exit and an end distanced therefrom, comprising the steps:

   a) arranging at least two data carriers ($Q_i$) at the queue (1) at different distances ($L_i$) from the exit (4), wherein each data carrier ($Q_i$) has a unique identifier ($id_i$) which is machine-readable by a smart device (8) of a waiting person (2) and which codifies the distance ($L_i$) of this data carrier ($Q_i$) from the exit (4);
   b) in a computing equipment (14): receiving identifiers ($id_i$) machine-read and sent via a radio network (9) by smart devices (8) over a predetermined time window ($\Delta T_n$), selecting the greatest distance from all the distances ($L_i$) which are codified by the identifiers ($id_i$) received in the time window ($\Delta T_n$), and outputting the selected distance as the length ($LQ_n$) of the queue (1).

11. The method according to claim 10, **characterised in that** the data carriers ($Q_i$) are arranged along the queue (1) distributed at approximately equal intervals ($\Delta L$).

12. The method according to claim 10 or 11, **characterised in that** the predetermined time window ($\Delta T_n$) is a tenth to ten times, preferably half to twice, particularly preferably one time, the value

$$\Delta T_{opt} = (\Delta L \cdot D) / (SR + FR) \qquad\qquad (3)$$

with

$\Delta L$ average distance between two adjacent data carriers ($Q_i$),
D average number of persons (2) per unit of length in the queue (1),
FR rate of persons (2) arriving at the end (3') of the queue (1) per unit of time,
SR rate of persons (2) leaving the exit (4) of the queue (1) per unit of time.

13. The method according to any one of claims 10 to 12, **characterised in that** each data carrier ($Q_i$) carries its identifier ($id_i$) in the form of a camera-readable QR code or barcode.

14. The method according to any one of claims 10 to 13, **characterised in that** each identifier ($id_i$) contains a web address of the computing equipment (14).

15. The method according to any one of claims 10 to 14, **characterised in that** step b) is repeated at least once in time intervals.

**Revendications**

1. Dispositif de mesure de la longueur d'une file d'attente de personnes qui a une sortie et une extrémité éloignée de celle-ci, **caractérisé par** :

   au moins deux supports de données ($Q_i$) disposés sur la file d'attente (1) à des distances ($L_i$) différentes de la sortie (4) avec respectivement un identifiant ($id_i$) unique, qui est lisible par machine par un dispositif intelligent (8) d'une personne (2) en attente et qui code la distance ($L_i$) de ce support de données ($Q_i$) par rapport à la sortie (4) ;
   un équipement de calcul (14) avec une interface (15), par laquelle il peut réceptionner des identifiants ($id_i$) lus par machine et envoyés via un réseau radio (9) par des dispositifs intelligents (8) ;
   dans lequel l'équipement de calcul (14) est conçu pour sélectionner, à partir de toutes les distances ($L_i$) qui sont codées par les identifiants ($id_i$) réceptionnés dans une fenêtre temporelle ($\Delta T_n$) prédéterminée, la distance la plus grande et la délivrer comme étant la longueur ($LQ_n$) de la file d'attente (1).

2. Dispositif selon la revendication 1, **caractérisé en ce que** les supports de données ($Q_i$) sont disposés le long de la file d'attente (1) de manière repartie à des intervalles ($\Delta L$) à peu près égaux.

3. Dispositif selon la revendication 1 ou 2, **caractérisé en ce que** la fenêtre temporelle ($\Delta T_n$) prédéterminée est un dixième jusqu'à dix fois, de préférence la moitié jusqu'au double, de manière particulièrement préférée une fois, la valeur

$$\Delta T_{opt} = (\Delta L \cdot D)/(SR + FR)$$

avec

$\Delta L$ distance moyenne entre deux supports de données ($Q_i$) voisins,
D nombre moyen de personnes (2) par unité de longueur dans la file d'attente (1),

FR taux de personnes (2) arrivant vers l'extrémité (3') de la file d'attente (1) par unité de temps,
SR taux de personnes (2) quittant la sortie (4) de la file d'attente (1) par unité de temps.

4. Dispositif selon l'une des revendications 1 à 3, **caractérisé en ce que** chaque support de données ($Q_i$) porte son identifiant ($id_i$) sous forme d'un QR-code ou d'un code-barres lisible par caméra.

5. Dispositif selon l'une des revendications 1 à 4, **caractérisé en ce que** chaque identifiant ($id_i$) contient une adresse web de l'équipement de calcul (14).

6. Dispositif selon l'une des revendications 1 à 5, **caractérisé en ce qu'**au moins un support de données ($Q_i$) est attaché sur un support de ruban (6) ou un poteau de délimitation pour la file d'attente (1).

7. Dispositif selon la revendication 6, **caractérisé en ce qu'**au moins un support de ruban (6), respectivement un poteau de délimitation, est pourvu d'au moins deux supports de données ($Q_i$) pointant vers des directions ($R_1$, $R_2$) différentes.

8. Dispositif selon l'une des revendications 1 à 7, **caractérisé en ce que** l'équipement de calcul (14) est en outre conçu pour calculer, pour au moins un support de données ($Q_i$), à partir de sa distance ($L_i$) par rapport à la sortie (4) et du taux (SR) actuel de personnes (2) quittant la sortie (4) par unité de temps, un temps d'attente ($WT_i$) actuel spécifique à l'emplacement du support de données et le mettre à disposition sous son identifiant ($id_i$) pour la délivrance via un réseau radio (9) d'un dispositif intelligent (8).

9. Dispositif selon la revendication 8, **caractérisé en ce que** l'équipement de calcul (14) est conçu pour réceptionner l'identifiant ($id_i$) lu par machine par un dispositif intelligent (8) via le réseau radio (9) et pour envoyer via le réseau radio (9) le temps d'attente ($WT_i$) actuel mis à disposition sous cet identifiant de ce dispositif intelligent (8) pour la délivrance sur celui-ci.

10. Procédé de mesure de la longueur d'une file d'attente de personnes qui a une sortie et une extrémité éloignée de celle-ci, comprenant les étapes :

 a) la disposition d'au moins deux supports de données ($Q_i$) sur la file d'attente (1) à des distances ($L_i$) différentes de la sortie (4), où chaque support de données ($Q_i$) a un identifiant ($id_i$) unique qui est lisible par machine par un dispositif intelligent (8) d'une personne (2) en attente et qui code la distance ($L_i$) de ce support de données ($Q_i$) par rapport à la sortie (4) ;
 b) dans un équipement de calcul (14) : la réception d'identifiants ($id_i$) lus par machine et envoyés via un réseau radio (9) par des dispositifs intelligents (8) sur une fenêtre temporelle ($\Delta T_n$) prédéterminée, la sélection de la distance la plus grande parmi toutes les distances ($L_i$) qui sont codées par les identifiants ($id_i$) réceptionnés dans la fenêtre temporelle ($\Delta T_n$), et la délivrance de la distance sélectionnée comme étant la longueur ($LQ_n$) de la file d'attente (1).

11. Procédé selon la revendication 10, **caractérisé en ce que** les supports de données ($Q_i$) sont disposés le long de la file d'attente (1) de manière repartie à des intervalles ($\Delta L$) à peu près égaux.

12. Procédé selon la revendication 10 ou 11, **caractérisé en ce que** la fenêtre temporelle ($\Delta T_n$) prédéterminée est un dixième jusqu'à dix fois, de préférence la moitié jusqu'au double, de manière particulièrement préférée une fois, la valeur

$$\Delta T_{opt} = (\Delta L \cdot D)/(SR + FR)$$

avec

 $\Delta L$ distance moyenne entre deux supports de données ($Q_i$) voisins,
 D nombre moyen de personnes (2) par unité de longueur dans la file d'attente (1),
 FR taux de personnes (2) arrivant vers l'extrémité (3') de la file d'attente (1) par unité de temps,
 SR taux de personnes (2) quittant la sortie (4) de la file d'attente (1) par unité de temps.

13. Procédé selon l'une des revendications 10 à 12, **caractérisé en ce que** chaque support de données ($Q_i$) porte son identifiant ($id_i$) sous forme d'un QR-code ou d'un code-barres lisible par caméra.

**14.** Procédé selon l'une des revendications 10 à 13, **caractérisé en ce que** chaque identifiant ($id_i$) contient une adresse web de l'équipement de calcul (14).

**15.** Procédé selon l'une des revendications 10 à 14, **caractérisé en ce que** l'étape b) est répétée au moins une fois dans des intervalles de temps.

**Fig. 1**

EP 4 354 366 B1

Fig. 2

*Fig. 3*

**Fig. 4**

**Fig. 5**

*Fig. 6*

**EP 4 354 366 B1**

**IN DER BESCHREIBUNG AUFGEFÜHRTE DOKUMENTE**

**In der Beschreibung aufgeführte Patentdokumente**

- EP 2937463 B1